# EUROPEAN PATENT APPLICATION

(11) **EP 2 323 089 A1**
(43) Date of publication of application: **18.05.2011**
(21) Application number: 10187245.5
(22) Date of filing: 12.10.2010
(51) Int. Cl.: G06Q 10/00, H04L 12/58, G07B 17/00

(54) **System and method for electronic delivery of mail based on physical addresses and including change of address processing**

(30) Priority: 12.10.2009 US 250868 P; 31.12.2009 US 651324
(71) Applicant: Pitney Bowes Inc., Stamford, CT 06926 (US)
(72) Inventor: Sagi, Surya R., Southbury, CT 06488 (US); Obrea, Andrei, Seymour, CT 06483 (US); Cordery, Robert A., Danbury, CT 06811 (US); D'Amato, Peter L., Woodbury, CT 06798 (US); DeCencio, Dean T., Haddonfield, NJ 08033 (US)
(74) Representative: HOFFMANN EITLE

(57) **Abstract**

Systems and methods for providing digital distribution (62) of mail to addresses based upon physical mailing addresses (42) are described. In certain configurations, additional electronic mail addresses are provided based upon an associated physical address (42) and another identifier such as the first and last names of individual (1, 2) in a particular household. Additionally, an improved change of address process is implemented using information received from third parties (80) to determine a confidence level that a particular individual or family has moved.

## Description

The illustrative embodiments of the present invention relate generally to mail delivery systems and, more particularly, to a new and useful system and method for managing the electronic delivery of mail in systems using physical addresses of recipients.

Systems and methods have been described for using a physical mailing address as an electronic mail address. For example, U.S. Patent No, 7,478,140, entitled System and Method for Sending Electronic Mail and Parcel Delivery Notification Using Recipient's Identification Information, issued January 13, 2009 to King, et al. describes a system using a recipient's physical address.

In the United States, many people move to a new physical address every year. According to the United States Postal Service ("USPS"), the USPS processes approximately 46 million address change requests every year. The USPS and its vendors make available the National Change of Address ("NCOA") database to volume mailers to reduce addressing errors. The NCOA database information is reported by individuals, families and businesses who decide to report their change of address information to the USPS. In many cases, individual household members move from the address while the other household members remain at the address. Furthermore, estimates suggest that 15-20% of the population moves without reporting the change of address.

Accordingly, there is a need, among other needs, for systems and methods to provide physical address based electronic mail addresses for individual members of a household. Additionally, there is a need for systems and methods to process - address change data and related information in systems that use a physical address as an electronic mailing address.

The accompanying drawings show illustrative embodiments of the invention and, together with the general description given above and the detailed description given below serve to explain certain principles of the invention. As shown throughout the drawings, like reference numerals designate like or corresponding parts.
FIG. 1 is a diagram showing a system and information flow for providing distribution of mail according to an illustrative embodiment of the present application
FIG. 2 is a flow diagram showing a process for providing an enhanced change of address system according to an illustrative embodiment of the present application.

Systems and methods for providing digital distribution of mail to addresses based upon physical mailing addresses are provided. In at least certain embodiments, additional electronic mail addresses are provided based upon an associated physical address and another identifier such as the first and last names of individuals in a particular household,

In certain embodiments, systems and methods to process address change data and related information in systems that use a physical address as an electronic mailing address are provided. In certain embodiments, the traditional National Change of Address database information is enhanced using information received from third parties such as mailers to determine a confidence level that a particular individual or family has moved. The obtained and determined change of address information is then utilized to improve delivery accuracy for mail sent to electronic mail addresses that are based upon a physical address.

The present invention is described in the context of illustrative embodiments directed to new and useful systems and methods for processing mail. Systems and methods for providing Digital distribution of mail to addresses based upon physical mailing addresses are provided. In at least certain embodiments, additional Electronic mail addresses are provided based upon an associated physical address and another identifier such as the first and last names of individuals in a particular household. For example, many households have more than one person in residence and each resident may be assigned an electronic address.

In certain embodiments, systems and methods to process address change data and related information in systems that use a physical address as an electronic mailing address are provided. In certain embodiments, the traditional National Change of Address database information is enhanced using information received from third parties such as mailers to determine a confidence level that a particular individual or family has moved. The obtained and determined change of address information is then utilized to improve delivery accuracy for mail sent to electronic mail addresses that are based upon a physical address. For example, financial institutions, utility companies or other mailers may provide new address information for an individual before the NCOA database is updated to reflect that the particular individual in question has moved to a new address.

Accordingly, an electronic message system may be provided to facilitate electronic delivery of mail to an electronic message address that is based on a physical address. Such a communication system may provide an alternate to physical delivery of mail in certain situations. An electronic message address such as an email address based solely on a physical address does not necessarily provide an individual email address for each member of a household. Certain embodiments described herein provide a flow of mail that is advantageously directed to a physical address location and a recipient identifier. Alternatively, access rights to messages delivered to a physical address based email address are utilized to provide individual household member access to mail delivered using an electronic message system. If multiple electronic addresses are assigned to one physical address, separate email addresses for household members may be managed in a timely manner as a result of analysis of messages directed to members of the household received from a variety of sources with relationships to household members.

Several illustrative hardware and software systems and subsystems are described herein that may advantageously utilize certain available components. For example, certain print-to-mail systems are available from the Pitney Bowes Emtex and Pitney Bowes Business insight subsidiaries of Pitney Bowes Inc. located in Stamford, Connecticut. Systems herein may utilize print stream processing systems, document printing, insertion and franking systems and electronic bill presentment and payment (EBPP) systems available from Pitney Bowes inc. For example, any of the systems and subsystems described in related application 61/250,868 may alternatively used with any of the embodiments herein as appropriate. The servers described are typically INTEL architecture servers such as DELL servers using the WINDOWS SERVER operating system software and the databases utilize ORACLE database systems. Additionally, the illustrative embodiments are described as enhancements to previously commercially available software systems marketed by EMTEX available from Pitney Bowes Inc. of Stamford, Connecticut.

Similarly, certain outgoing mail print stream processing systems have been described for separating documents in a print stream or batch into two separate print streams - a physical delivery print stream and an electronic delivery print stream based on customer delivery preferences. Commonly-owned U.S. Patent No. 6,343,327, entitled System and Method for Electronic and Physical Mass Mailing, issued to Daniels, Jr., et al. on January 29, 2002 describes such systems and is incorporated by reference herein in its entirety. Such systems described therein may be modified using the systems, processes and techniques described herein to provide an initial delivery channel with a backup channel that is used when deemed necessary.

Variable data documents that are printed and mailed (i.e. statements, invoices, targeted marketing communications) contain time sensitive information. It is essential for document owners (senders) to ensure delivery of these documents to their customers. Traditionally, these documents are printed and mailed to customers. A growing number senders and customers are seeking electronic delivery options. If the electronic delivery is misdirected, the lost messages can cause payment or purchasing delays that have negative cash flow impact to the sender and penalties or lost opportunities for customers.

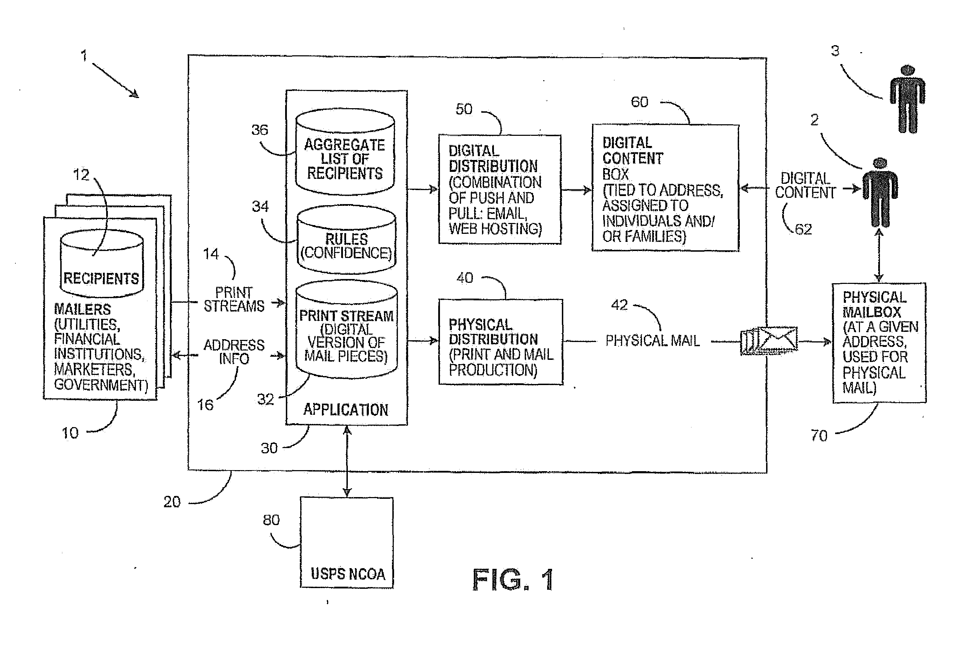

Referring to FIG. 1, a diagram showing a system 1 and information flow for providing distribution of mail according to an illustrative embodiment of the present application is shown. The central mail system 20 is a mail creation, finishing and delivery service that is constructed as a physical and electronic automated document factory (ADF) with a digital content server 60. In this configuration, several mailers 10 utilize information technology and data processing systems to deliver among other data, print streams 14 and address information 16 to the central mail system 20. The mailers 10 may utilize one or more data communications channels to communicate with system 20 including secure internet channels such as a VPN, a dedicated line or physical delivery of media. Typical mailers 10 include organizations that create and deliver transactional and periodic physical communications that are often sent by first class mail such organizations including utilities, financial institutions, marketers and government agencies, Such mailers 10 have IT systems that includes recipient databases 12 and IT systems used to provide print streams such as legacy mainframe systems that provide print stream data for statements, etc. that may be printed in the native format or reformatted and enhanced before printing. Alternatively, a Mailer 10 may own and operate system 20.

In certain illustrative embodiments, the system 20 receives a single print stream from a mailers 10 and uses recipient profile data received from the mailer 10 or otherwise obtained from the user to split the print stream into physical and electronic delivery streams. Prior to printing and mailing or electronically delivering the documents, the Application system 30 will provide an enhanced delivery address verification for at least the electronic documents (alternatively, the processes may be applied to the physical documents and/or the electronic documents).

The Application System Server 30 includes a Print Stream database 32 that includes at least the respective print stream 14 and address information 16 from a particular mailer 10 for a particular mail batch. The Application Server 30 includes a Confidence Rules database 34 that includes confidence factors based upon the type of communication associated with new address information that is not reflected in the particular print stream 14 for an individual who is to receive a mailing in that mail batch. The Application Server 30 also includes an Aggregate List of Recipients database 36 that includes address data from multiple print streams that includes account numbers that can be used to associate successive monthly statements for a single account. In one alternative the database 36 includes recipient data obtained from multiple mailers. The Application Server 30 also includes a link to the USPS NCOA database 80 using one or more data communications channels including secure internet channels such as a VPN, a dedicated line or physical delivery of media.

The Application Server 30 utilizes at least the print stream 14 to process a mail batch into a digital distribution and a physical distribution. Individual recipient information may be used by Application 30 to deliver a digital distribution to an electronic messaging system associated with the physical address of the message and an identifier associated with the intended individual recipient such as a first and last name. Moreover, the Application Server 30 utilizes the Confidence Rules and additional address data to enhance the destination address accuracy above the capability of the USPS NCOA system.

The Physical Distribution subsystem 40 (printing/mailing of hard copy) is implemented in the illustrative embodiment as an automated document factory (ADF) using mail piece creation systems described may be obtained from Pitney Bowes Inc. of Stamford, Connecticut that include the PITNEY BOWES SERIES 11 inserter systems, the PITNEY BOWES INTELLIJET printing system, and the PITNEY BOWES DM INFINITY postage meter. The documents produced may include the full range of documents processed in ADFs including direct mail, statements such as monthly or financial transaction statements of accounts, credit cards and brokerage accounts and may also include bills for services and utilities and goods purchased. The physical mail 42 is then delivered to a physical mailbox for the household 70 and accessed by a member of the household 2.

The Digital Distribution subsystem 50 is implemented as a combination of email push systems and World Wide Web hosted electronic messaging pull systems. E-messaging system available from the Pitney Bowes Business Insights group may be built into the server. A Digital Content server 60 is provided to host a pull system electronic messaging server with addresses based upon a household physical address and an individual identifier. The digital content 62 may be accessed by a member of the household 2, or if directed to a particular individual, then may be accessed by that individual such as household member 3.

For example, if the head of the household and owner or lessee of the physical home is John Smith 2, he could establish an electronic mail address associated with the physical address. The additional household member is John Smith's young adult son James Smith 3. The default electronic message format incudes the identifier of the address such as 123_main_street_anytown_state. In a pull system or non-standard email push system that does not have to satisfy internet email naming conventions, that address is sufficient. In a push system across the Internet that is provided by a government entity, the electronic address may use the format: 123_main__street_anytown_state@esnail.gov.

In one embodiment, a single household level electronic message address is provided in Digital Content Server 60 as shown above:
123_main_street_anytown_state. However, additional household member electronic message addresses are provided based upon the physical mailing address and an identifier associated with an individual household member such as a first and last name. In this example, three electronic message addresses are provided inducing the household address and two additional addresses formatted as shown John_Smith. 123_main_street_anytown_state and James_Smith.123_main_street_anytown_state. Accordingly, Digital Distribution Server 50 may direct mail to the individual electronic message address.

The Digital Distribution Server 50 may determine the individual intended recipient using one or more of several method. Initially, the system may process the print stream to recognize the name and address that is to be printed on the envelope or in an addressee field of a document that will show through an envelope window. Accordingly, the system 20 may determine whether a mail piece is intended for James Smith or John Smith. Additionally, the system 20 and/or server 50 may process address and recipient metadata sent from the mailers 10 separately from the print stream to determine a particular individual recipient in a household. Furthermore, the system 20 may analyze the print stream data to determine an account number associated with a particular intended recipient. For example, the system 20 may periodically process invoices from a particular mailer such as a particular utility company. Each invoice represented in the print stream will include an account number that can be obtained by the print stream analysis software. Accordingly, for each account number obtained, the system 20 can check previous mail piece data to determine the individual recipient identifier in addition to the destination address.

In yet another one embodiment, all mail electronically directed to the illustrative household would be sent to the single electronic message address above: 123_main_street_anytown_state. However, the Digital Distribution system 50 may apply an access code specific to an individual such as James Smith 3 so that only he could access those messages stored in Digital Content Server 60.

In yet another embodiment, applicable to any of the embodiments herein, a potential change of address indication is determined by analyzing the print stream data. For example, the system 20 may periodically process invoices from a particular mailer such as a particular utility company. Each invoice represented in the print stream will include an account number that can be obtained by the print stream analysis software. Accordingly, for each account number obtained, the system 20 compares the address and recipient from the stored previous invoice sent to that account number with the address and recipient on the current invoice. If there is a difference, then an enhanced address change indication is triggered such as using the confidence levels described herein with reference to TABLE 1.

There are several change of address scenarios that are addressed in an electronic message mail delivery system as described herein. For example, if a household moves to a new address from an old address, they may complete the NCOA form or may not complete the NCOA form. If they do not complete the NCOA form, the family moving to the old address may file an appropriate NCOA form. Moreover, a single member of a household may move to a new address from an old address and may or may not complete the NCOA form.

Furthermore, in the enhanced address move systems described, several factors influence confidence in a move as shown in TABLE 1. For example, a completed NCOA form provides complete confidence and a specific request received from an individual provides very high confidence. Mail from an authoritative source like financial or utility provides significant confidence. A NCOA received from another party moving to the recipients address indicates a likely move. An unexpected address for normally stable mail also provides an indication of a likely move.

If someone moves to an address associated with an electronic message digital content box that has not yet been associated with a household, then the electronic message digital content box is initialized to that household when a NCOA change to that address is received or when a high confidence mail piece is received for a household and/or particular individual in a household at that address. Similarly, if the NCOA database shows that a household has moved from an address associated with an electronic message digital content box that has been associated with a household, then the association may be terminated and forwarded to the new address.

If the NCOA database shows that a household has moved to an address associated with an electronic message digital content box that has been associated with a different household, and the original household has not filed a move out NCOA form, then the old association is no longer considered reliable. In this system, the individual electronic message addresses may be used to ensure accurate deliver during a move overlap window of time.

If an individual files an NCOA form moving from an address associated with an electronic message digital content box that has been associated with a household, then the household association remains, but the individual association in this improved addressing scheme is moved to the new address.

If someone moves to our illustrative 123 Main Street address from an address associated with an electronic message digital content box that has been associated with a household, the notification mechanisms utilized may differ than those used if the new resident was not previously using the electronic system. One method to confirm that someone is residing at a physical address is to mail a physical letter to that person at the address with a confirmation code enclosed. However, in this system, the confirmation messages may be sent to one or more of the following for a particular person: the old electronic address, the new electronic address, the old physical address and the new Physical address. In certain instances, the preferences of the recipient will determine the message communication channel. In other instances the preferences of mailer will be used. In certain instances legal restriction such as regulations regarding forwarding of a particular type of mail will control the message channel. Furthermore, business rules based on a level of confidence that an address change occurred will be used.

Examples of levels of confidence based on the source of information are shown in TABLE 1 below.

**TABLE 1**

| **Source of change of address info** | **Confidence level** |
|---|---|
| NCOA | 100% |
| Mailer - Financial Institution | 80% |
| Mailer - Government | 75% |
| Mailer - Utilities group 1 (electric, gas) | 60% |
| Mailer - Utilities group 2 (wireless) | 45% |
| Marketers | 30% |
| Recipients themselves (with Confirmation) | 100% |
| Recipients themselves (unsolicited) | 95% |

Given a mail message from a print stream for a recipient, the system can send either the message from the print stream or a just a request for confirmation of address change. The choice will depend on the certainty of the fact that the recipient has moved and the nature of the application. For example, a magazine may be sent to a new physical address or to an old physical address, while for a medical record only a request for confirmation of address change may be sent if there is any indication the recipient has moved.

The system can perform any combination of four distinct actions with a message to be delivered to a recipient. Either the message or a request for confirmation of address change can be processed by one or more of the following:
1. Send to the old physical address; 2. Send to the new physical address; 3. Send to the old digital content box; or 4. Send to the new digital content box. There are 16 total combinations of methods, 15 of which send a message to the recipient and one alternative to send nothing. The choice depends on the application.

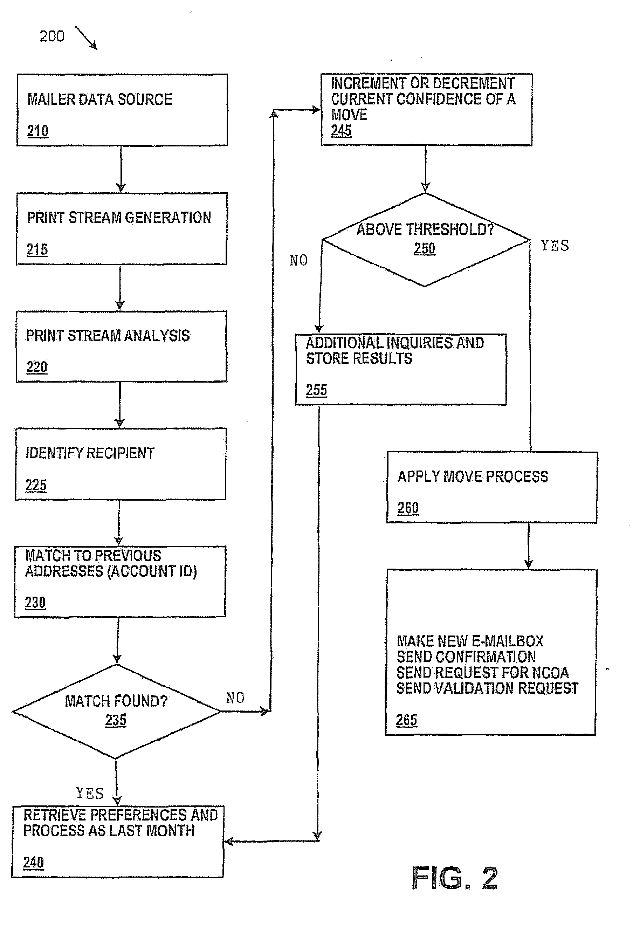

Referring to FIG. 2, a flow diagram showing a process 200 for providing an enhanced change of address system according to an illustrative embodiment of the present application is shown. In step 210, the system receives document print job data and delivery preference data from a particular mailer 10. In step 215, the system generates a print stream using traditional processing. In step 220, the system provides a print stream analysis. In step 225, the system identifies a particular recipient. In step 230, the system attempts to match the recipient to previous addresses such as using an account ID. If a match is found in step 235, then the system proceeds to step 240. The system then retrieves any preferences associated with that recipient and processes the current mail piece as the previous mail piece was processed.

If a match is not found in step 235, then the system proceeds to step 245 in order to increment or decrement a current confidence of a move for the particular individual based upon TABLE 1 above and proceeds to step 250. If the new confidence value is not above a set threshold (e.g., 75%) in step 250, then the system proceeds to step 255 to store the updated confidence value in the appropriate database and to send an inquiry to the mailer and recipient regarding the potential address discrepancy. The system then proceeds to step 240 and retrieves any preferences associated with that recipient and processes the current mail piece as the previous mail piece was processed.

If the new confidence value is above a set threshold (e.g., 75%) in step 250, then the system proceeds to step 260 and processes the move information. In step 265, the system creates a new electronic messaging box to reflect the new address of the intended recipient. The system creates and sends a confirmation message. The system sends a request for a NCOA update. The system then sends a validation request message by mail to the recipient at the new address with a code used to verify the new address.

The various systems and subsystems described herein may alternatively reside on a different configuration of hardware such as a single server connected to an ADF and mail channel with appropriate modifications. Furthermore, while the USPS physical delivery system has been described, other physical delivery systems such as courier systems may be used. Several embodiments have been described using an electronic message address format of john_smith.123_main_sireet_anytown_state@esnail.gov. However, the system does not necessarily require an email system and could instead use an index into a web service. For example, a new top level domain names ADD for address may be defined and each address assigned to a domain such as john_ smith@123_main_street_anytown_state.add.

Although the invention has been described with respect to particular illustrative embodiments thereof, it will be understood by those skilled in the art that the foregoing and various other changes, omissions and deviations in the form and detail thereof may be made without departing from the scope of this invention.

## Claims

1. A system (1) for providing mail communications to a recipient using an electronic message channel comprising:
an electronic mail subsystem (50) configured to includes at least two electronic mail boxes (60), each with an electronic mail address for a respective one of at least two individuals (1,2) associated with a household that is associated with a physical address (70) of the household, wherein each electronic mail address is associated with an identifier associated with the respective individual and
an electronic mail creation subsystem (50) configured to analyze a mail print stream (14) defining at least one mail piece directed to one of the at least two individuals (1,2), the analysis performed to identity the physical address and the identifier associated with the respective individual, wherein the electronic mail creation subsystem (50) will address and deliver the mail piece electronically to one of the at least two electronic mail boxes (60) based upon the physical address of the household and the identifier associated with the respective individual (1,2).

2. The system of claim 1, further comprising:
a subsystem (50, 60) for processing move information for a single one of the at least two individuals (1,2) associated with a household.

3. The system of claim 2, further comprising:
a subsystem for processing the move information based upon a confidence rating associated with a second mail piece addressed to the single individual at a second physical address.

4. The system of claim, 1, 2 or 3, wherein:
identifier associated with the respective individual includes a first name and a last name.

5. The system of any preceding claim, wherein:
the electronic mail address comprises an Internet email address.

6. The system of any preceding claim, wherein:
the electronic mail address comprises an Internet domain name.

7. The system of any preceding claim, wherein:
the identifier associated with the respective individual (1,2) is determined by obtaining an account number associated with the mail piece and obtaining data related to the account number for a database including prior mail piece data.

8. A method for directing a mail piece and confirming an address of a mail piece recipient comprising:
receiving (220) a print stream(14) including information for the mail piece including a destination address;
identifying (225) a recipient (1,2) of the mail piece;
determining (235) if the destination address is a new address for the recipient;
if the destination address is not a new address for the recipient, processing (240) the mail piece according to stored preference data associated with the recipient at an old address;
if the destination address is a new address for the recipient, determining (245) a confidence level related to the new address;
if the confidence level is not above a threshold (250), then processing (240) the mail piece according to stored preference data associated with the recipient; and
if the confidence level is above the threshold, then processing (260) a change of address and delivering the mail piece according a new address delivery process.

9. The method of claim 8, wherein:
the new address delivery process includes confirming the new address by sending (265) an electronic confirmation request to the individual at the old address.

10. The method of claim 8 or 9, wherein:
the new address delivery process incudes validating (265) the new address by sending a physical validation request to the individual at the new address.

11. The method of claim 8, 9 or 10, wherein:
the determination of the confidence level is based at least partially on a type of mailer associated with the mail piece.

12. The method of any one of claims 8 to 11, wherein:
determining if the destination address is a new address for the recipient is determined at least partially by obtaining an account number associated with the mail piece and obtaining data related to the account number for a database including prior mail piece data.
